# EUROPEAN PATENT SPECIFICATION

(11) **EP 3 090 230 B1**
(45) Date of publication and mention of the grant of the patent: **28.03.2018**
(21) Application number: 14816352.0
(22) Date of filing: 07.11.2014
(51) Int. Cl.: F28D 7/00, F28F 27/00, F28D 20/02, F01D 25/00, F02K 7/00, F28D 20/00

(54) **A HEAT EXCHANGER**
WÄRMETAUSCHER
ÉCHANGEUR DE CHALEUR

(30) Priority: 26.11.2013 FI 20130353
(43) Date of publication of application: 09.11.2016
(73) Proprietor: Visorc Oy, 50130 Mikkeli (FI)
(72) Inventor: HEINIMÖ, Jussi, FI-78850 Varkaus (FI); PYRHÖNEN, Juha Jaakko, FI-53850 Lappeenranta (FI); RÖYTTÄ, Pekka, 127719 Singapore (SG); TERVONEN, Hannu Helmer, deceased (FI); TURUNEN-SAARESTI, Teemu, FI-54920 Taipalsaari (FI)
(74) Representative: Finnpatent Oy
(86) International application number: PCT/FI2014/050840
(87) International publication number: WO 2015/079100

(56) References cited:
- DE-A1-102012 109 625
- US-A- 5 944 089
- US-A1- 2003 070 794
- US-A1- 2011 240 249

## Description

### Field of the invention

The invention relates to a heat exchanger where phase change material "PCM" is utilized for storing heat energy according to the preamble of claim 1. DE 10 2012 109625 discloses such a heat exchanger.

### Background

Heat exchangers are used in many different systems and installations where heat energy carried by a first fluid has to be partially transferred to a second fluid. A heat exchanger can constitute for example a vaporizer of a small-size energy converter. The small-size energy converter can be based on, for example, the Organic Rankine Cycle "ORC" process and it can be used for converting the thermal energy of waste heat into electricity which is easily used for different purposes. The waste heat can be received from various heat-producing processes or heat-producing machines, e.g. a combustion engine or a gas turbine, where, due to the temperature of the waste heat and/or due to the circumstances of the environment, the waste heat cannot be used as such or by means of conventional energy converters or corresponding means.

It can be shown thermodynamically that the ORC process is an applicable technique for this kind of energy conversion. The heat of vaporization of organic working fluid is low in relation to e.g. the heat of evaporation of water, and its fall of specific enthalpy in the turbine is small and the mass flow rate in relation to the output is high, wherein it is possible to reach high turbine efficiency even in a range of small capacity. The utilization of high-speed technology, wherein the turbine is directly coupled with a generator rotating at the same speed and thus producing high-frequency current, has made it possible to further simplify the process in a way that e.g. a separate reduction gear required by conventional processes is not needed. Also, the high speed technology makes it possible to provide a hermetic process, which means significant savings in the operational expenses.

Publication EP0090022 describes an energy converter that comprises a vaporizer, i.e. a boiler, a radial turbine, a condenser, a feed pump, and a high-speed generator. The energy converter may further comprise a recuperator and a pre-feeding pump. The thermal energy supplied to the vaporizer is arranged to maintain the Organic Rankine Cycle process driving the generator and thus producing electricity. The radial turbine and the feed pump are directly connected to the rotor of the generator. The rotor is rotatably carried with gas-dynamic bearings utilizing the organic working fluid in gaseous form. The back-surface of the radial turbine is arranged to serve as one abutment surface of a gas-static thrust bearing.

Energy converters of the kind described above are, however, not free from challenges. One of the challenges is related to the fact that the power of the heat flow received by the vaporizer may vary significantly over time. For example, the power of waste heat produced by a combustion engine of a vehicle or a working machine may be sporadically so low that the thermodynamic energy conversion process, e.g. the ORC process, of an energy converter of the kind described above cannot be maintained. Variations of the power of the heat flow received by the vaporizer can be, in some extent, compensated for with the aid of the heat storage capacity of mechanical structures of the vaporizer. The required heat storage capacity depends on the magnitude of power fluctuations and especially on lengths of time periods during which the power of the heat flow is incapable of maintaining the thermodynamic energy conversion process. In some cases, it may be however challenging to provide so much heat storage capacity that is needed for ensuring reliable maintenance of the thermodynamic energy conversion process in all practical situations. Publication EP2415976 presents a heat storage provided with phase change material "PCM". The heat energy related to phase changes between the solid and liquid states of the phase change material makes it possible to achieve more heat storage capacity with a smaller mass. The inconvenience related to many phase change materials that would be suitable for energy converters of the kind discussed above is, however, their susceptibility to chemical decomposition in high temperatures that may occasionally take place.

Publication JP2007100649 describes a reciprocating engine which is both air cooled and also liquid cooled. A room for a cooling liquid jacket surrounding the cylinders contains phase change material which allows the engine to warm up swiftly after a start when the phase change material is in the solid state, i.e. its temperature is below its smelting point.

### Summary

The following presents a simplified summary in order to provide a basic understanding of some embodiments of the invention. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new heat exchanger that comprises a heat exchanging element comprising heat transferring walls for transferring heat from first fluid to second fluid. The heat exchanger comprises one or more rooms containing phase change material "PCM" capable of storing heat energy by changing from the solid state to the liquid state and releasing the heat energy by changing from the liquid state back to the solid state.

The heat exchanger further comprises a cooling channel system suitable for conducting third fluid for cooling the phase change material so as to protect the phase change material against overheating. The cooling channel system comprises one or more controllable valves, and the heat exchanger comprises one or more temperature sensors and a controller for controlling the one or more controllable valves responsive to the one or more output signals of the one or more temperature sensors. Therefore, by providing an energy converter or another system where the heat exchanger is being used with an appropriate cooling system connected to the above-mentioned cooling channel system, the phase change material can be protected against overheating and thereby against chemical decomposition.

In accordance with the invention, there is provided also a new energy converter that can be based on, for example but not necessarily, the Organic Rankine Cycle "ORC" process. An energy converter according to the invention comprises:
- a vaporizer for receiving a main heat flow from an external heat source and for vaporizing working fluid, and
- an electrical turbo-machine for converting energy contained by the vaporized working fluid into electrical energy, the electrical turbo-machine comprising a turbine section and a generator section.

The vaporizer comprises a heat exchanger according to the invention so that the heat transferring walls of the heat exchanger are arranged to transfer heat to the working fluid. Therefore, the heat released by phase change material "PCM" of the heat exchanger may temporarily maintain the thermodynamic energy conversion process instead of or in addition to the main heat flow. The energy converter further comprises ducts for conducting cooling fluid to and from the cooling channel system of the heat exchanger. The cooling fluid can be for example air.

The above-described energy converter is suitable for being used also with such external heat sources, e.g. combustion engines of vehicles and working machines, whose output heat flow is so fluctuating that this heat flow as such would sometimes be unable to maintain the thermodynamic energy conversion process, e.g. the ORC process, of the energy converter.

An energy converter according to an exemplifying and non-limiting embodiment of the invention further comprises a controllable heating device for generating a controllable auxiliary heat flow to the vaporizer so as to at least partly compensate for temporal variations of power of the main heat flow in cases where the heat storage capacity of the vaporizer is not capable of sufficiently compensating for the temporal variations of the power of the main heat flow.

The controllable heating device can be for example a burner or an electrical resistor arranged to heat the vaporizer when the main heat flow received from the external heat source and the heat released by the heat storage capacity of the vaporizer are not even together sufficient for maintaining the thermodynamic energy conversion process of the energy converter.

A number of non-limiting and exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", i.e. a singular form, throughout this document does as such not exclude a plurality.

### Brief description of the figures

The exemplifying embodiments of the invention and their advantages are explained in greater detail below in the sense of examples and with reference to the accompanying drawings, in which:
figures 1a, 1b, and 1c illustrate a heat exchanger according to an exemplifying embodiment of the invention, and
figure 2 shows a schematic block diagram of an energy converter according to an exemplifying embodiment of the invention.

### Description of exemplifying embodiments

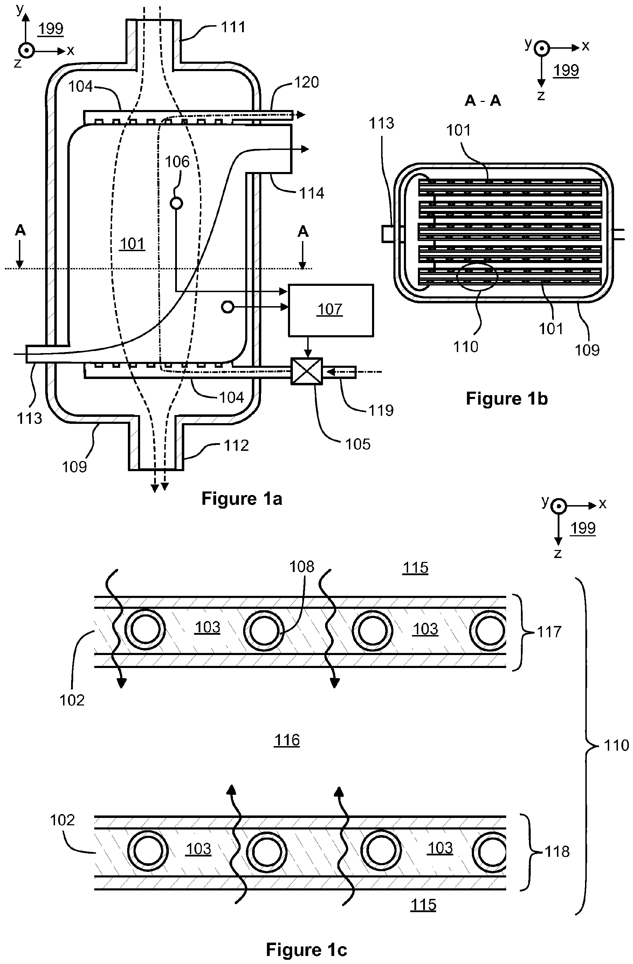

Figure 1 a illustrates a heat exchanger according to an exemplifying embodiment of the invention. In figure 1a, an outer shell 109 of the heat exchanger is presented as a section view so that the section plane is parallel with the xy-plane of a coordinate system 199. Figure 1b shows a view of a section taken along the line A-A shown in figure 1 a. The section plane of the section shown in figure 1b is parallel with the xz-plane of the coordinate system 199. The heat exchanger comprises a heat exchanging element 101 located inside the outer shell 109 and comprising heat transferring walls for preventing first fluid and second fluid from mixing with each other and for transferring heat from the first fluid to the second fluid. Without limiting generality and for merely illustrative purposes we can consider an exemplifying situation where the above-mentioned first fluid which is cooled down is fluid flowing through the outer shell 109 from a piping interface 111 to a piping interface 112 as illustrated with dashed line arrows in figure 1a, and where the above-mentioned second fluid which is warmed up is fluid flowing through the heat exchanging element 101 from a piping interface 113 to a piping interface 114 as illustrated with a solid line arrow in figure 1 a.

Figure 1c shows a magnification of a portion 110 of figure 1b. In the above-mentioned exemplifying situation, the first fluid flows on areas 115 and the second fluid flows on an area 116. The first fluid has a speed component in the negative y-direction of the coordinate system 199, and the second fluid has a speed component in the positive y-direction of the coordinate system 199. Heat transfer through the heat transferring walls 117 and 118 from the first fluid to the second fluid is depicted with wave-line arrows. The heat exchanger comprises phase change material "PCM" capable of storing heat energy by changing from the solid state to the liquid state and releasing the heat energy by changing from the liquid state back to the solid state. In the exemplifying case illustrated in figures 1a-1c, the heat transferring walls comprise rooms 102 arranged to contain the phase change material 103. It is also possible that the heat exchanger contains separate containers for the phase change material. The phase change material may comprise for example potassium-nitrate KNO₃ and/or sodium-nitrate NaNO₃. The heat energy related to phase changes between the solid and liquid states of the phase change material makes it possible to achieve more heat storage capacity with a smaller mass of the heat exchanger.

The heat exchanger further comprises a cooling channel system 104 suitable for conducting third fluid for cooling the above-mentioned phase change material so as to protect the phase change material against overheating. Without limiting generality and for merely illustrative purposes we can consider an exemplifying situation where the third fluid flows through the cooling channel system 104 from a piping interface 119 to a piping interface 120 as illustrated with a dot-and-dash line arrow in figure 1a. In the exemplifying heat exchanger illustrated in figures 1a-1c, the cooling channel system 104 comprises pipes located among the phase change material 103. One of the pipes is denoted with a reference number 108 in figure 1c. The third fluid for protecting the phase change material 103 against overheating can be for example air.

In the exemplifying case illustrated in figures 1a-1c, the cooling channel system 104 comprises a controllable valve 105 and the heat exchanger comprises temperature sensors and a controller 107 for controlling the controllable valve 105 responsive to the output signals of the temperature sensors. One of the temperature sensors is denoted with a reference number 106 in figure 1a. The temperature sensors are advantageously arranged to measure temperatures from the phase change material at various measurement points. It is also possible that the cooling channel system comprises two or more controllable valves located at two or more piping interfaces so that different portions of the phase change material can be selectively cooled.

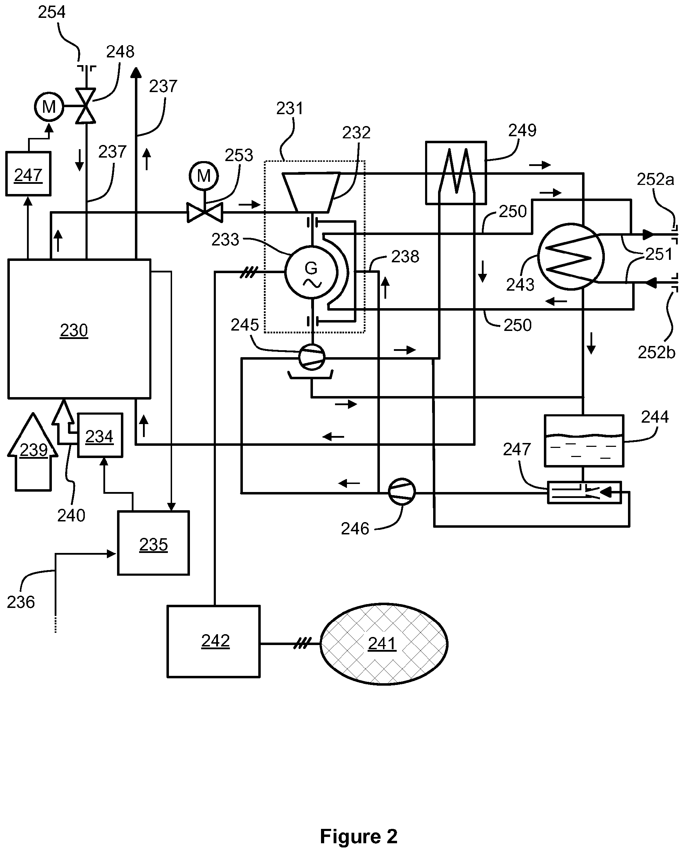

Figure 2 shows a schematic block diagram of an energy converter according to an exemplifying embodiment of the invention. The energy converter is advantageously an Organic Rankine Cycle "ORC" energy converter that uses suitable organic fluid as the working fluid. The organic fluid can be, for example but not necessarily, one of the siloxanes. It is also possible that the energy converter uses suitable non-organic fluid as the working fluid. The energy converter comprises a vaporizer 230 for receiving a main heat flow 239 from an external heat source and for vaporizing the working fluid. The external heat source can be for example a heat-producing process or a heat-producing machine, e.g. a combustion engine. The external heat source is not shown in figure 2. The vaporizer 230 comprises a heat exchanging element that comprises heat transferring walls for preventing the working fluid and fluid received from the external heat source, e.g. exhaust gas of a combustion engine, from mixing with each other and for transferring heat to the working fluid. The heat exchanging element comprises one or more rooms containing phase change material capable of storing heat energy by changing from the solid state to the liquid state and releasing the heat energy by changing from the liquid state back to the solid state. The vaporizer 230 further comprises a cooling channel system suitable for conducting cooling fluid for cooling the phase change material so as to protect the phase change material against overheating. The energy converter comprises ducts 237 for conducting the cooling fluid to and from the cooling channel system of the vaporizer 230. The vaporizer 230 may comprise one or more temperature sensors which are advantageously arranged to measure one or more temperatures from the phase change material at various measurement points. The exemplifying energy converter illustrated in figure 2 comprises a controller 247 arranged to control a valve 248 and thereby to control the flow of the cooling fluid in accordance with the measured temperatures so as to protect the phase change material against overheating. The cooling fluid can be for example air. In a case the external heat source is a turbocharged combustion engine, the air can be taken from a turbocharger or from an intercooler. The ducts 237 can be connected to the turbocharger, to the intercooler, or to any other system for providing pressurized air or other cooling fluid with the aid of a piping interface 254. It is also possible that the energy converter comprises a blower for circulating air in the cooling channel system of the vaporizer 230. The blower can be controlled in accordance with the one or more temperatures measured from the phase change material.

The energy converter comprises an electrical turbo-machine 231 for converting energy contained by the vaporized working fluid into electrical energy. In the exemplifying case illustrated in figure 2, the electrical energy outputted by the electrical turbo-machine 231 is supplied to a power grid 241 with the aid of a frequency converter 242. The exemplifying energy converter illustrated in figure 2 comprises a condenser 243 for condensing the vaporized working fluid outputted by the electrical turbo-machine 231 and a condenser tank 244 for storing the condensed working fluid. The energy converter comprises a feed pump system for pumping the condensed working fluid from the condenser tank 244 to the vaporizer 230. In the exemplifying energy converter illustrated in figure 2, the feed pump system comprises a feed pump 245, a pre-feed pump 246, and an ejector-pump 247 for supplying the pre-feed pump and operated e.g. by the output flow of the feed pump 245. An energy converter according to another exemplifying embodiment of the invention comprises connection interfaces for connecting to an external feed pump system, and/or to an external condenser element, and/or to an external condenser tank.

The electrical turbo-machine 231 is advantageously a high-speed machine whose rotational speed can be as high as e.g. 10000...60000 rpm. The electrical turbo-machine 231 comprises a generator section 233 and a turbine section 232. The feed pump 245 is integrated with the electrical turbo-machine 231. The generator section 233 comprises a stator and a rotor for magnetically interacting with the stator. The rotor of the generator section may comprise permanent magnets for producing a magnetic flux penetrating the air-gap between the rotor and the stator. In this case, the generator section is capable of operating as a permanent magnet synchronous generator "PMSG". It is also possible that the rotor comprises electrically conductive structures so that the generator section is capable of operating as an asynchronous generator. The stator of the generator section 233 comprises a stator core structure comprising a plurality of stator teeth and stator slots. The stator core structure is preferably made of steel sheets that are electrically insulated from each other and that are stacked in the direction parallel with the axial direction of the rotor of the generator section 233. The stator further comprises a stator winding that comprises a plurality of stator coils. The turbine section 232 comprises a diffuser, a stator nozzle ring, and an impeller suitable for operating as a turbine for rotating the rotor of the generator section. The stator nozzle ring, the impeller, and the diffuser of the turbine section 232 are advantageously suitable for operating as a radial turbine stage whose degree of reaction is less than 50 % e.g. 30 %. Thus, the axial height of the impeller vanes can be increased and, as a corollary, the ratio of the axial clearance to the axial height of the impeller can be made smaller, and thus the efficiency can be improved. The degree of reaction or reaction ratio is defined as the ratio of the static enthalpy drop in the impeller to the static enthalpy drop in the whole turbine stage. The feed pump 245 comprises an impeller for pumping the working fluid. In the exemplifying energy converter illustrated in figure 2, both the impeller of the turbine section 232 and the impeller of the feed pump 245 are directly coupled to the rotor of the generator section 233. The impeller of the feed pump 245 can be a straight vane radial impeller of a "Barske"-type partial emission pump. The impeller of the feed pump 245 can be provided with a screw-type inducer for reducing the risk of cavitation on the vanes of the impeller of the feed pump 245, and thereby to reduce the required pre-supply pressure.

An energy converter according to an exemplifying embodiment of the invention comprises a controllable heating device 234 for generating a controllable auxiliary heat flow 240 to the vaporizer 230 so as to at least partly compensate for temporal variations of the power of the main heat flow 239. The controllable heating device 234 can be for example a burner adapted to use gaseous or liquid form fuel. For another example, the controllable heating device 234 can be an electrical resistor. The controllable heating device 234 can be arranged to heat the vaporizer 230 when the power of the main heat flow 239 received from the external heat source and the heat power released by the heat storage capacity of the vaporizer 230 are not even together sufficient for maintaining the thermodynamic energy conversion process of the energy converter. A need to activate the controllable heating device 234 can be detected at least partly on the basis of one or more temperatures measured from one or more measurement points in or in the vicinity of the vaporizer 230. With the aid of the controllable heating device 234, repetitive shutdowns and start-ups of the energy converter can be avoided. The energy converter may further comprise a control system 235 configured to control the controllable heating device 234 at least partly on the basis of the one or more temperatures measured from the one or more measurement points in or in the vicinity of the vaporizer 230. The control can be for example a two-point control where the controllable heating device 234 is activated when a measured temperature goes below a first predetermined limit and deactivated when the measured temperature exceeds a second predetermined limit that is higher than the first predetermined limit. It is also possible that the control system 235 is configured to control the controllable heating device 234 at least partly on the basis of a control signal 236 received from the external heat source producing the main heat flow 239. It is also possible that the control system 235 is configured to control the controllable heating device 234 at least partly on the basis of both the control signal 236 and the one or more measured temperatures. The control signal 236 may indicate for example the loading state of the external heat source, e.g. a position of a throttle valve of a combustion engine. In this case, the controllable heating device 234 can be controlled more proactively than in cases where the control is based merely on the one or more measured temperatures which may react with delays to the changes of the power of the main heat flow 239.

In the exemplifying case illustrated in figure 2, the energy converter comprises ducts 238 for conducting the working fluid to the bearings of the electrical turbo-machine 231 so as to lubricate the bearings with the working fluid. The electrical turbo-machine 231 and the feed-pump 245 are advantageously encapsulated with a hermetic casing for preventing the working fluid from leaking to ambient air and for preventing the ambient air from leaking to the energy conversion process run by the energy converter.

The exemplifying energy converter illustrated in figure 2 comprises a recuperator 249 for increasing the efficiency of the energy conversion. The recuperator is a heat exchanging element arranged to transfer heat energy from the vaporized working fluid outputted by the electrical turbo-machine 231 to the condensed working fluid outputted by the feed pump 245 and being supplied to the vaporizer 230.

The exemplifying energy converter illustrated in figure 2 further comprises first cooling ducts 250 for conducting cooling fluid, e.g. water, to and from the electrical turbo-machine 231 and second cooling ducts 251 for conducting cooling fluid to and from the condenser 243. As illustrated in figure 2, the first and second cooling ducts constitute mutually parallel flowing paths for the cooling fluid. The first and second cooling ducts can be connected to an external cooling fluid circulation system with the aid of a piping interface 252a, 252b. However, this is only an example of cooling arrangement of the electrical turbo-machine 231. It may be cooled also otherwise.

Furthermore, the exemplifying energy converter illustrated in figure 2 comprises a turbine valve 253 and possibly other control and/or safety instrumentation.

The specific examples provided in the description given above should not be construed as limiting. Therefore, the invention is not limited merely to the exemplifying embodiments described above.

## Claims

1. A heat exchanger comprising a heat exchanging element (101) comprising heat transferring walls for transferring heat from first fluid to second fluid, wherein the heat exchanger comprises one or more rooms (102) containing phase change material (103) capable of storing heat energy by changing from solid state to liquid state and releasing the heat energy by changing from the liquid state back to the solid state, **characterized in that** the heat exchanger further comprises a cooling channel system (104) for conducting third fluid for cooling the phase change material so as to protect the phase change material against overheating, and **in that** the cooling channel system comprises one or more controllable valves (105), and that the heat exchanger comprises one or more temperature sensors (106) and a controller (107) for controlling the one or more controllable valves responsive to one or more output signals of the one or more temperature sensors.

2. A heat exchanger according to claim 1, wherein the heat transferring walls (117, 118) comprise the one or more rooms (102) containing the phase change material (103).

3. A heat exchanger according to claim 1 or 2, wherein the phase change material comprises at least one of the following: potassium-nitrate KNO₃, sodium-nitrate NaNO₃.

4. An energy converter comprising:
- a vaporizer (230) for receiving a main heat flow from an external heat source and for vaporizing working fluid, and
- an electrical turbo-machine (231) for converting energy contained by the vaporized working fluid into electrical energy, the electrical turbo-machine comprising a turbine section (232) and a generator section (233),
wherein the vaporizer comprises a heat exchanger according to any of claims 1-3 so that the heat transferring walls of the heat exchanger are arranged to transfer heat energy from the main heat flow to the working fluid, and the energy converter further comprises ducts (237) for conducting cooling fluid to and from the cooling channel system of the heat exchanger.

5. An energy converter according to claim 4, wherein the energy converter further comprises a controllable heating device (234) for generating a controllable auxiliary heat flow to the vaporizer so as to at least partly compensate for temporal variations of power of the main heat flow.

6. An energy converter according to claim 5, wherein the energy converter comprises a control system (235) configured to control the controllable heating device at least partly on the basis of one or more temperatures measured from one or more measurement points in or in the vicinity of the vaporizer.

7. An energy converter according to claim 5 or 6, wherein the energy converter comprises a control system (235) configured to control the controllable heating device at least partly on the basis of a control signal (236) received from the external heat source.

8. An energy converter according to any of claims 4-7, wherein the controllable heating device comprises at least one of the following: a burner for heating the vaporizer, an electrical resistor for heating the vaporizer.

9. An energy converter according to any of claims 4-8, wherein the ducts (237) are arranged to conduct air to and from the cooling channel system of the heat exchanger.

10. An energy converter according to any of claims 4-9, wherein the working fluid is organic working fluid.

## Patentansprüche

1. Wärmetauscher, umfassend ein Wärmetauschelement (101), umfassend Wärmeübertragungswände zum Übertragen von Wärme von einem ersten Fluid auf ein zweites Fluid, wobei der Wärmetauscher einen oder mehrere Räume (102) umfasst, welche Phasenwechselmaterial (103) enthalten, welches dazu geeignet ist, Wärmeenergie durch Wechseln von einem festen Zustand in einen flüssigen Zustand zu speichern und die Wärmeenergie durch Wechseln von dem flüssigen Zustand zurück in den festen Zustand abzugeben, **dadurch gekennzeichnet, dass** der Wärmetauscher ferner ein Kühlkanalsystem (104) zum Leiten eines dritten Fluids zur Kühlung des Phasenwechselmaterials umfasst, um das Phasenwechselmaterial vor einem Überhitzen zu schützen, und dadurch, dass das Kühlkanalsystem ein oder mehrere steuer-/regelbare Ventile (105) umfasst und, dass der Wärmetauscher einen oder mehrere Temperatursensoren (106) und eine Steuerungs-/Regelungseinheit (107) zum Steuern/Regeln des einen oder der mehreren steuer-/regelbaren Ventile reagierend auf ein oder mehrere Ausgangssignale des einen oder der mehreren Temperatursensoren umfasst.

2. Wärmetauscher nach Anspruch 1, wobei die Wärmeübertragungswände (117, 118) den einen oder die mehreren Räume (102) umfassen, welche das Phasenwechselmaterial (103) enthalten.

3. Wärmetauscher nach Anspruch 1 oder 2, wobei das Phasenwechselmaterial wenigstens eines der Folgenden umfasst: Kaliumnitrat KNO₃, Natriumnitrat NaNO₃.

4. Energiewandler, umfassend:
- einen Verdampfer (230) zum Empfangen eines Hauptwärmestroms von einer externen Wärmequelle und zum Verdampfen von einem Arbeitsfluid, und
- eine elektrische Turbomaschine (231) zum Wandeln von in dem verdampften Arbeitsfluid enthaltener Energie in elektrische Energie, wobei die elektrische Turbomaschine einen Turbinenabschnitt (232) und einen Generatorabschnitt (233) umfasst,
wobei der Verdampfer einen Wärmetauscher nach einem der Ansprüche 1-3 umfasst, so dass die Wärmeübertragungswände des Wärmetauschers angeordnet sind, um Wärmeenergie von dem Hauptwärmestrom auf das Arbeitsfluid zu übertragen, und der Energiewandler ferner Leitungen (237) zum Leiten von Kühlfluid zu und aus dem Kühlkanalsystem des Wärmetauschers umfasst.

5. Energiewandler nach Anspruch 4, wobei der Energiewandler ferner eine steuer-/regelbare Heizvorrichtung (234) zum Erzeugen eines steuer-/regelbaren Hilfswärmestroms zu dem Verdampfer umfasst, um temporäre Leistungsschwankungen des Hauptwärmestromes wenigstens teilweise zu kompensieren.

6. Energiewandler nach Anspruch 5, wobei der Energiewandler ein Steuerungs-/ Regelungssystem (235) umfasst, welches dazu eingerichtet ist, die steuer-/regelbare Heizvorrichtung wenigstens teilweise auf der Grundlage einer oder mehrerer Temperaturen zu steuern/ regeln, welche von einem oder mehreren Messpunkten in dem Verdampfer oder in dessen Nähe gemessen werden.

7. Energiewandler nach Anspruch 5 oder 6, wobei der Energiewandler ein Steuerungs-/ Regelungssystem (235) umfasst, welches dazu eingerichtet ist, die steuer-/regelbare Heizvorrichtung wenigstens teilweise auf der Grundlage eines Steuerungs-/ Regelungssignals (236) zu steuern/ regeln, welches von der externen Wärmequelle empfangen wird.

8. Energiewandler nach einem der Ansprüche 4-7, wobei die steuer-/regelbare Heizvorrichtung wenigstens eines der Folgenden umfasst: einen Brenner zum Heizen des Verdampfers, einen elektrischen Widerstand zum Heizen des Verdampfers.

9. Energiewandler nach einem der Ansprüche 4-8, wobei die Leitungen (237) angeordnet sind, um Luft zu und aus dem Kühlkanalsystem des Wärmetauschers zu leiten.

10. Energiewandler nach einem der Ansprüche 4-9, wobei das Arbeitsfluid ein organisches Arbeitsfluid ist.

## Revendications

1. Échangeur de chaleur comprenant un élément d'échange de chaleur (101) comprenant des parois de transfert de chaleur destinées à transférer la chaleur d'un premier fluide vers un second fluide, dans lequel l'échangeur de chaleur comprend une ou plusieurs chambres (102) contenant un matériau à changement de phase (103) capable de stocker l'énergie thermique en passant d'un état solide à un état solide et de libérer l'énergie thermique en repassant de l'état liquide à l'état solide, **caractérisé en ce que** l'échangeur de chaleur comprend en outre un système de canaux de refroidissement (104) destiné à conduire un troisième fluide destiné à refroidir le matériau à changement de phase de façon à protéger le matériau à changement de phase contre la surchauffe, et **en ce que** le système de canaux de refroidissement comprend une ou plusieurs soupapes contrôlables (105), et **en ce que** l'échangeur de chaleur comprend un ou plusieurs capteurs de température (106) et un contrôleur (107) destiné à contrôler la ou les soupapes contrôlables en réponse à un ou plusieurs signaux de sortie du ou des capteurs de température.

2. Échangeur de chaleur selon la revendication 1, dans lequel les parois de transfert de chaleur (117, 118) comprennent la ou les chambres (102) contenant le matériau à changement de phase (103).

3. Échangeur de chaleur selon la revendication 1 ou 2, dans lequel le matériau à changement de phase comprend au moins l'un de ce qui suit : du nitrate de potassium (KNO₃), du nitrate de sodium (NaNO₃).

4. Convertisseur d'énergie comprenant :
- un vaporisateur (230) destiné à recevoir un flux de chaleur principal de la part d'une source de chaleur externe et à vaporiser un fluide de fonctionnement, et
- une turbomachine électrique (231) destinée à convertir l'énergie contenue par le fluide de fonctionnement vaporisé en énergie électrique, la turbomachine électrique comprenant une section de turbine (232) et une section de générateur (233),
dans lequel le vaporisateur comprend un échangeur de chaleur selon l'une quelconque des revendications 1 à 3 de sorte que les parois de transfert de chaleur de l'échangeur de chaleur soient arrangées pour transférer l'énergie thermique du flux de chaleur principal vers le fluide de fonctionnement, et le convertisseur d'énergie comprend en outre des conduits (237) destinés à acheminer un fluide de refroidissement vers et depuis le système de canaux de refroidissement de l'échangeur de chaleur.

5. Convertisseur d'énergie selon la revendication 4, dans lequel le convertisseur d'énergie comprend en outre un dispositif de chauffage contrôlable (234) destiné à générer un flux de chaleur auxiliaire contrôlable vers le vaporisateur de façon à compenser au moins partiellement les variations de puissance temporelles du flux de chaleur principal.

6. Convertisseur d'énergie selon la revendication 5, dans lequel le convertisseur d'énergie comprend un système de commande (235) configuré pour contrôler le dispositif de chauffage contrôlable au moins partiellement sur la base d'une ou plusieurs températures mesurées à un ou plusieurs points de mesure situés dans ou à proximité du vaporisateur.

7. Convertisseur d'énergie selon la revendication 5 ou 6, dans lequel le convertisseur d'énergie comprend un système de commande (235) configuré pour contrôler le dispositif de chauffage contrôlable au moins partiellement sur la base d'un signal de commande (236) reçu de la part de la source de chaleur externe.

8. Convertisseur d'énergie selon l'une quelconque des revendications 4 à 7, dans lequel le dispositif de chauffage contrôlable comprend au moins l'un de ce qui suit : un brûleur destiné à chauffer le vaporisateur, une résistance électrique destinée à chauffer le vaporisateur.

9. Convertisseur d'énergie selon l'une quelconque des revendications 4 à 8, dans lequel les conduits (237) sont arrangés pour acheminer de l'air vers et depuis le système de canaux de refroidissement de l'échangeur de chaleur.

10. Convertisseur d'énergie selon l'une quelconque des revendications 4 à 9, dans lequel le fluide de fonctionnement est un fluide de fonctionnement organique.
